# EUROPÄISCHE PATENTSCHRIFT

(11) **EP 3 591 957 B1**
(45) Veröffentlichungstag und Bekanntmachung des Hinweises auf die Patenterteilung: **19.07.2023**
(21) Anmeldenummer: 19182588.4
(22) Anmeldetag: 26.06.2019
(51) Int. Cl.: H04N 23/52, B60R 11/04, G03B 17/55, G03B 17/02

(54) **ANORDNUNG EINER KAMERA AN EINEM FAHRZEUG**
ASSEMBLY OF A CAMERA ON A VEHICLE
MONTAGE D'UNE CAMÉRA SUR UN VÉHICULE

(30) Priorität: 02.07.2018 DE 202018103760 U
(43) Veröffentlichungstag der Anmeldung: 08.01.2020
(73) Patentinhaber: EYYES GmbH, 3494 Gedersdorf (AT)
(72) Erfinder: Traxler, Johannes, 3500 Imbach (AT)
(74) Vertreter: Burgstaller, Peter

(56) Entgegenhaltungen:
- EP-A1- 3 270 042
- WO-A1-2017/178045
- AT-B- 400 641
- CN-U- 206 712 908
- US-A1- 2005 206 780
- US-A1- 2017 345 159

## Beschreibung

Die im Folgenden offenbarte Erfindung betrifft die Anordnung einer Kamera an einem Fahrzeug mit einem ersten Temperaturbereich und einem zweiten Temperaturbereich nach dem Oberbegriff des Anspruches 1. Die Kamera umfasst ein Objektiv mitsamt Bildsensor und eine Steuerungseinheit.

Die Anordnung von Objektiven und Bildsensoren, mittels welcher Objektiven und Bildsensoren eine Umgebung um das Fahrzeug durch beispielsweise eine im Fahrzeuginneren befindliche Person beobachtet werden kann, und einer Steuerungseinheit zur Steuerung des Bildsensors an dem Fahrzeug ist mit der Lösung vielseitiger Problemstellungen verbunden, wobei sich die im Folgenden diskutierte Erfindung als die gemeinsame Lösung der folgenden Problemstellungen versteht.

Ein zentrales Problem der Anordnung einer Kamera an einem Fahrzeug ist die Bewältigung der unterschiedlichen Temperaturen. Eine zu hohe Temperatur oder eine zu hohe Erwärmungsrate der Kamera oder von Komponenten der Kamera kann zu einer zumindest teilweisen Zerstörung der Kamera oder deren Komponenten wie die Steuereinheit führen. Insbesondere eine Steuereinheit mit den auf dieser angeordneten Rechenprozessoren ist nach dem Stand der Technik ein temperaturempfindliches Bauteil.

Im Rahmen der Offenbarung der Erfindung wird der Begriff des Erwärmens und des Kühlens gleichgesetzt. Falls nichts anderes explizit angeführt ist, so ist der im Folgenden verwendete Begriff des Erwärmens allgemein als eine hervorgerufene Temperaturveränderung zu einer Anfangstemperatur oder einer Vergleichstemperatur zu verstehen, wobei kein für die Offenbarung dieser Erfindung relevanter Unterschied zu einer Kühlung besteht. Der Begriff des Erwärmens und der Begriff des Kühlens sind sohin - sofern nichts anderes angeführt ist - gleichzusetzen.

Der Fachmann versteht weiters, dass zum Steuern der Temperatur eines Objektes oder der Umgebung um ein Objekt die Temperatur des Objektes beziehungsweise die Temperatur der Umgebung zu messen ist. Der Fachmann ist in der Lage, die zur Steuerung der Heizvorrichtung notwendigen Temperaturfühler anzuordnen. Es ist nach dem Stand der Technik bekannt, dass die Steuerungseinheit der Kamera in einem ersten Temperaturbereich und das Objektiv mitsamt Bildsensor in einem zweiten Temperaturbereich angeordnet ist, wobei der erste Temperaturbereich und der zweite Temperaturbereich durch eine Fahrzeugkarosserie des Fahrzeuges oder ein Element des Fahrzeuges getrennt sind. Der Bildsensor und die Steuerungseinheit sind über eine Datenverbindung nach dem Stand der Technik miteinander verbunden.

Die nach dem Stand der Technik bekannte Lösung stellt allerdings keine zufriedenstellende Lösung im Sinne der Begrenzung der Erwärmungsrate und der Temperaturbereiches dar, mit welcher minimalen oder maximalen Erwärmungsrate die Kamera oder die Steuereinheit der Kamera erwärmt wird beziehungsweise in welchem Temperaturbereich die Kamera oder die Steuereinheit der Kamera betrieben wird.

Der Innenbereich eines Fahrzeuges unterliegt starken Schwankungen, welche Schwankungen durch das Fehlen von Bauteilen mit einer ausreichenden Wärmespeicherkapazität und/oder durch die Art der Wärmequellen hervorgerufen werden.

Bauteile mit einer hohen Wärmespeicherkapazität weisen im Regelfall ein hohes Eigengewicht auf und werden aus diesem Grund in Fahrzeugen wie beispielsweise in einem Automobil vermieden.

In Fahrzeugen sind üblicher Weise Wärmequellen angeordnet, welche Wärmequellen die im Innenraum des Fahrzeuges eingeschlossene Luft direkt und nicht indirekt über ein Medium mit einer höheren Wärmespeicherkapazität als Luft wie beispielsweise eine Heizflüssigkeit erwärmen. Dies bedingt eine Erwärmung des Fahrzeuginneren mit Erwärmungsraten, welche Erwärmungsraten in der Regel für die Steuerungseinheit schädlich sind. Im Sinne der Offenbarung dieser Erfindung muss eine Wärmequelle nicht eine Vorrichtung sein, welche Vorrichtung ausschließlich zur Erzeugung von Wärme konzipiert ist. Die Wärmequelle kann eine Vorrichtung sein, welche Vorrichtung bei Betrieb Wärme abgibt.

Die Dokumente WO2017178045, AT400641, CN206712908, EP3270042 und US10242451 offenbarten nicht die Anordnung der Steuereinheit in einem Gehäuse mit Kühlrippen auf einer der Erwärmungsquelle abgewandten Seite des Gehäuses, wobei die Steuerungseinheit in einem größeren Abstand zu der Erwärmungsquelle als zu einer Kühlrippe angeordnet ist.

Die Erfindung sieht die Lösung gemäß Anspruch 1 vor.

Die erfindungsgemäße Lösung sieht prinzipiell vor, dass die im Fahrzeuginneren angeordnete Steuerungseinheit in einem Gehäuse angeordnet ist, welches Gehäuse die im Anspruch 1 angegebene Wärmeleitzahl aufweist. Durch die angegebene Wärmeleitzahl wird erreicht, dass bei einer üblichen Anordnung der Steuereinheit in einem Fahrzeug die durch Wärmequelle hervorgerufene Erwärmung innerhalb einer Erwärmungsratenbereiches bleibt, welchen Erwärmungsratenbereich der Fachmann aus Herstellerangaben zu der Steuerungseinheit erhält. Die Erfindung sieht vor, dass neben dem ersten Temperaturbereich und dem zweiten Temperaturbereich ein Gehäusetemperaturbereich zur Gewährleistung der für die Steuereinheit zulässigen thermischen Verhältnisse wie Temperatur und Erwärmungsrate geschaffen wird. Die Temperatur im Gehäuseinneren wird durch das Gehäuse als ein die Steuerungseinheit umhüllender Gegenstand definiert. Das Gehäuse wirkt sohin als eine sich um die Steuerungseinheit erstreckende thermische Hülle. Eine Erwärmung der Steuerungseinheit erfolgt - abgesehen von der eigens verursachten Erwärmung - erfolgt ausschließlich unter Erwärmung des Gehäuses.

Weiters zeichnet sich ein Gehäuse mit den oben genannten thermischen Eigenschaften dadurch aus, dass die von der Steuereinheit bei Betrieb produzierte Wärme von dem Gehäuse in einem Ausmaß von der Steuereinheit abgeführt wird, sodass eine Erwärmung der Steuereinheit über eine maximale Temperatur hinaus unterbunden wird. Der Fachmann kennt die maximale Betriebstemperatur aus den Herstellerangaben. Eine Steuereinheit aufweisend eine Betriebstemperatur unter der maximalen Betriebstemperatur kann sich beispielsweise durch einen geringen Energiebedarf und/oder durch einen hohen Rechenaufwand auszeichnen.

Das Gehäuse mit den oben genannten thermischen Eigenschaften zeichnet sich aber auch dadurch aus, dass die von der Steuereinheit produzierte Wärme bei Betrieb oder insbesondere im Anfangszeitraum des Betriebes nur in einem solchen Ausmaß abgegeben wird, dass die Steuereinheit bei Betrieb oder im Anfangszeitraum des Betriebes in dem Ausmaß erwärmt wird, dass die Steuereinheit eine Mindesttemperatur aufweist beziehungsweise diese erreicht. Eine Steuereinheit aufweisend eine Mindesttemperatur kann sich beispielsweise durch einen geringen Energiebedarf und/oder durch einen hohen Rechenaufwand auszeichnen.

Die erfindungsgemäße Lösung zeichnet sich auch dadurch aus, dass die Steuerungseinheit durch die Wärmequelle mit einer minimalen Erwärmungsrate erwärmt wird, sodass die Steuerungseinheit nach einer definierten Zeitspanne eine minimale Temperatur aufweist. Die Steuerungseinheit kann sich nach der gängigen Lehre dadurch auszeichnen, dass eine Steuerungseinheit aufweisend die minimale Temperatur besondere Eigenschaften wie beispielsweise einen geringen Energieverbrauch und/oder eine maximale Rechenleistung aufweist.

Die erfindungsgemäße Lösung zeichnet sich weiters dadurch aus, dass die Steuerungseinheit durch die Wärmequelle mit einer maximalen Erwärmungsrate erwärmt wird, sodass die Steuerungseinheit eine Temperatur kleiner gleich der maximalen Betriebstemperatur aufweist.

Die effektive Erwärmungsrate wird unter Verweis auf die gängige Lehre durch die Wärmeleistung der Wärmequelle auf das Gehäuse bestimmt. Der Fachmann kann die effektive Erwärmungsrate unter Anwendung der gängigen Lehre berechnen und/oder simulieren. Der Fachmann entnimmt weiters die maximale Erwärmungsrate den Herstellerangaben zu der Steuereinheit.

Es können in den jeweiligen Temperaturbereichen Temperaturfühler angeordnet sein, mittels welcher Temperaturfühler die Temperatur des jeweiligen Temperaturbereiches und/oder der in diesem Bereich angeordneten Elemente bestimmbar ist. In weiterer Folge ist mittels der durch die Temperaturfühler gemessenen Temperaturdaten eine Heizvorrichtung steuerbar.

Die Steuerungseinheit umfasst im Wesentlichen eine Platine mit elektronischen Bauteilen. Unter Verweis auf die gängige Lehre dürfen ausgewählte elektronische Bauteile - insbesondere bei tiefen Temperaturen - nur langsam erwärmt werden, um den elektronischen Bauteilen keinen Schaden zuzufügen. Dem steht jedoch entgegen, dass bei tiefen Temperaturen und bei vorliegender Vereisung des Objektivs oder gleichbedeutend hierzu einer durchsichtigen Abdeckscheibe oder eines Fensters, das Objektiv sehr rasch zu erwärmen ist, um einen ehest baldigen Gebrauch der Kamera zu ermöglichen.

Es ist im Falle von Kraftfahrzeugen oder Zügen eine durchaus übliche Anwendung, dass die Elemente der Kameravorrichtung von einem Temperaturbereich von minus 40° Celsius auf Temperaturen von wenigen Grad Plus erwärmt werden.

Die durch die Offenbarung dieser Erfindung aufgezeigte Lösung sieht vor, dass das Objektiv mitsamt Bildsensor in einem ersten Temperaturbereich, nämlich außerhalb der Fahrzeugkarosserie angeordnet ist. Die Steuerungseinheit ist in einem zweiten Temperaturbereich, nämlich im Fahrzeuginneren und darüber hinaus in einem Gehäuse mit den im Anspruch 1 angegebenen thermischen Eigenschaften und/oder der thermischen Wirkung auf die Steuereinheit im Zusammenhang mit der Wärmequelle und sohin in dem Gehäusetemperaturbereich angeordnet, wobei der Bildsensor und die Steuerungseinheit mittels einer geeigneten Datenverbindung verbunden sind.

Die Datenverbindung kann durch eine Funkverbindung und/oder durch ein Datenkabel hergestellt sein. Es kommen als Datenkabel vorzugsweise Lichtwellenkabel zum Einsatz, da Lichtwellenkabel sowohl für die Belastungen im ersten Temperaturbereich als auch für die Belastungen im zweiten Temperaturbereich geeignet sind. Der Fachmann ist in der Lage, in Kenntnis der zu erwartenden Wärmebelastungen und Kältebelastungen weitere Kabel mit einer ausreichenden Datenübertragung auszuwählen.

Bei Vorliegen einer Funkverbindung und bei einer Datenkabelverbindung ist die Stromversorgung zwischen der im Fahrzeuginneren angeordneten Stromversorgung und dem im Fahrzeugäußeren angeordneten Bildsensor zu gewährleisten. Bei der Verwendung von Lichtwellenkabeln ist die Verwendung der Lichtwellenkabel zur Stromversorgung oder das Vorsehen eines getrennten Kabelstranges in einem Kabelverbund denkbar.

Der erste Temperaturbereich und der zweite Temperaturbereich werden nach dem Stand der Technik einerseits durch die Karosserie mit ihren dämmenden Eigenschaften und/oder durch eine unterschiedliche Beheizung der Bereiche und/oder durch die Anwesenheit von weiteren Gegenständen und deren thermischen Eigenschaften vorgegeben. Der erste Temperaturbereich und der zweite Temperaturbereich sind durch die Karosserie mit ihren dämmenden Eigenschaften getrennt. Hierdurch wird auch erreicht, dass bei einer starken Erwärmung des zweiten Temperaturbereiches der erste Temperaturbereich hierdurch nicht übermäßig erwärmt wird.

Nach der gängigen Lehre kann das Objektiv mitsamt dem Bildsensor stark erwärmt werden. Dies wird insbesondere gewünscht und/oder ist notwendig, um eine Vereisung des Objektives zu unterbinden oder zu lösen. Die thermischen Eigenschaften des Objektives gestatten es, dass die Heizvorrichtung direkt auf das Objekt aufgebracht ist oder direkt auf das Objektiv eine Heizenergie abgibt.

Eine Erwärmung des Fahrzeuginneren und insbesondere die Erwärmung des Gehäuseinneren erfolgt in der Regel wegen der thermischen Eigenschaften des Gehäuses langsamer als die Erwärmung des Objektivs. Eine Beschädigung der auf der Steuerungseinheit angeordneten elektronischen Komponenten kann hierdurch ausgeschlossen werden.

Es kann insbesondere auf der Steuerungseinheit ein Kamerasensor angeordnet sein. Bei einer zu raschen Erwärmung besteht die Gefahr, dass im Kamerasensor Risse entstehen. Durch Anordnung des Kamerasensors im Fahrzeuginneren und der damit erreichten ausschließlichen allmählichen Erwärmung des Kamerasensors kann die Gefahr der Rissbildung im Kamerasensor durch die erfindungsgemäße Anordnung unterbunden werden.

Es kann die Steuerungseinheit eine Steuerungseinheitheizung umfassen, welche Steuerungseinheitheizung sicherstellt, dass die Steuerungseinheit stets die richtige Temperatur aufweist. Die Regelung der Temperatur der Steuereinheit kann insbesondere erforderlich sein, wenn die den ersten Temperaturbereich und den zweiten Temperaturbereich trennenden Elemente wie beispielsweise die Karosserie des Fahrzeuges keine ausreichende Dämmwirkung haben, sodass durch die Heizvorrichtung des einen Temperaturbereiches der andere Temperaturbereich derart beeinflusst wird, sodass ein Schaden für die erwähnten elektronischen Bauteile zu befürchten ist.

Es kann die Steuerungseinheit weiters eine Lüftung oder eine ähnliche Vorrichtung zur Abfuhr von Wärme umfassen. Das Gehäuse kann gegebenenfalls in Kombination mit der Lüftung Öffnungen umfassen, über welche Öffnungen die Wärme aus dem Gehäuse abgeführt werden kann. Das Vorsehen von Öffnungen im Gehäuse ist nicht auf die Anordnung einer Lüftung im Gehäuse beschränkt oder durch diese bedingt.

Die erfindungsgemäße Anordnung erlaubt es, dass das Objektiv mitsamt dem Bildsensor in einem weiteren Gehäuse angeordnet ist, welches Gehäuse minimale Abmessungen aufweist.

Durch die Anordnung der Steuerungseinheit in einem Gehäuse im Fahrzeuginneren und die Anordnung des Objektives mitsamt Bildsensor in einem am Fahrzeugäußeren angeordneten weitern Gehäuse kann die Größe des Gehäuses auf ein Minimum reduziert werden, da nur die unbedingt notwendigen Elemente im weiteren Gehäuse angeordnet werden. Die Reduzierung des weiteren Gehäuses auf eine minimale Größe ist ein seit langer Zeit bestehendes Verlangen.

Im Vergleich zu Vorrichtungen nach dem Stand der Technik entfällt das für die Anordnung der Steuereinheit üblicher Weise vorgesehene und gegebenenfalls für eine thermische Trennung von Heizung und Steuerung erforderliche Gehäusevolumen.

Kameravorrichtungen zur Beobachtung der Fahrzeugumgebung können leicht verstellt werden, sodass ein vom gewollten Bildbereich unterschiedlicher Bildbereich aufgenommen wird. Dies ist insbesondere in dem Fall von Bedeutung, wenn der Benutzer die Verstellung der Kameravorrichtung und die Aufnahme eines geänderten Bildbereiches nicht bemerkt.

Bei einem herkömmlichen Spiegel zur Beobachtung der Fahrzeugumgebung kann der Benutzer eine Verstellung des Spiegels anhand der Stellung des Spiegels erkennen. Da bei Kameravorrichtungen die Stellung des Objektivs und/oder des Bildsensors für den Benutzer nur schwer erkennbar ist, ist eine solche oder zu der Kontrolle der Stellung des Spiegels ähnliche Überprüfung der Stellung des Objektives bei der Verwendung von Kameravorrichtungen nicht möglich.

Im Wesentlichen ist die Kontrolle der Stellung der Kamera als ein von der Anordnung der Elemente wie Steuervorrichtung, Objektiv, Bildsensor unabhängiges Problem anzusehen. Die obige Offenbarung der Erfindung umfasst jedoch auch den Hinweis, dass ein Objektiv und Bildsensor einschließendes Gehäuse aufgrund der erfindungsgemäßen Anordnung sehr klein ausgeführt werden kann. Aufgrund der möglichen kleinen Abmessungen des Gehäuses besteht für den Benutzer auch nicht die Möglichkeit, über die Stellung des Gehäuses die Stellung des Objektivs zu erkennen.

Bei einer Kontrolle der Stellung des Objektivs und/oder des Bildsensors ist zu überprüfen, ob der durch den Bildsensor definierte Bildbereich zum Fahrzeug richtig orientiert ist, d.h. der richtige Bereich der Umgebung als Bildbereich abgebildet ist.

Die erfindungsgemäße Vorrichtung kann - auch unabhängig von der oben angeführten Anordnung der Elemente - sich dadurch auszeichnen, dass das Objektiv eine Lichtquelle umfasst, welche Lichtquelle ein Licht in den Bildbereich des Bildsensors abgibt.

Das durch die Lichtquelle emittierte Licht wird durch die Karosserie des Fahrzeuges und/oder durch die in der Umgebung zu dem Fahrzeug befindlichen Gegenstände reflektiert. Es ist ein Hinweis auf eine Verstellung des Objektivs, wenn das auf dem Gegenstand reflektierte Licht nicht vom Bildbereich des Bildsensors aufgenommen wird. Über die Position des reflektierten Lichtes kann weiters das Ausmaß der Verstellung abgeschätzt werden.

Vorzugsweise ist das reflektierte Licht als ein Punkt im Bildbereich zu sehen.

Das Licht kann ein strukturiertes Licht sein. Ein strukturiertes Licht zeichnet sich dadurch aus, dass eine geometrische Struktur am Gegenstand reflektiert wird. Durch eine geometrische Analyse der Struktur kann die Lage und die Orientierung der reflektierenden Oberfläche des Gegenstandes im beziehungsweise zu dem Bildbereich des Bildsensors nach Verfahren nach dem Stand der Technik ermittelt werden.

Das strukturierte Licht weist beispielsweise die Form eines Rasters auf. Das Raster umfasst erste Strahlen in Lichtausgaberichtung und weist zweite Strahlen rechtwinkelig zu den ersten Strahlen auf. Die ersten Strahlen und die zweiten Strahlen bilden in einem unverzerrten Zustand oder in einem so genannten Nullzustand Quadrate aus, sodass anhand der Verzerrung der Quadrate die Lage und/oder die Orientierung der reflektierenden Fläche durch eine geometrische Analyse nach dem Stand der Technik ermittelt werden kann.

Die Lage und/oder die Orientierung der reflektierenden Oberfläche kann beispielsweise mittels einer time-of-flight Kamera ermittelt werden. Bei Verwendung einer time-of-flight Kamera wird mittels einer Lichtquelle ein Lichtsignal auf die Oberfläche ausgegeben, welches Lichtsignal auf der Oberfläche reflektiert und durch die Kamera aufgenommen wird. Da die Geschwindigkeit der Ausbreitung eines Lichtsignals oder von Licht im Allgemeinen bekannt wird, kann durch Messen der Zeitspanne von der Ausgabe des Lichtes bis zur Aufnahme des Lichtes die Distanz zwischen der Oberfläche und der Kamera beziehungsweise der Lichtquelle bestimmt werden.

Es kann ein Lichtsignal ausgegeben werden, welches Lichtsignal punktförmig an der Oberfläche reflektiert wird. Hierdurch wird die Lage dieses Reflexionspunktes zu der Kamera beziehungsweise zu der Lichtquelle ermittelt. Die Lage und/oder der geometrische Verlauf der Oberfläche kann durch die Ausgabe von mehreren Lichtsignalen auf mehrere Reflexionspunkte und die Ermittlung der jeweiligen Distanzen zwischen Reflexionspunkten und der Kamera beziehungsweise der Lichtquelle oder Lichtquellen ermittelt werden.

Bei Verwendung einer time-of-flight Kamera hat die Kamera die Funktion der Bildaufnahme, die weitere Funktion der Lichtausgabe und die Aufgabe der Distanzmessung zwischen der reflektierenden Oberfläche und der Kamera. Im Sinne der Vereinigung der Funktionen sind die Lichtquelle und der Bildsensor in der Kamera integriert.

Die Erfindung ist weiters durch die Figuren dargestellt, wobei die Figuren folgenden Inhalt haben.
Figur 1 zeigt die prinzipielle Anordnung von Objektiv, Bildsensor und Steuerungseinheit für eine Außenkamera.
Figur 2 zeigt anhand eines Schnittbildes die Anwendung der Anordnung bei einem Scheinwerfer.
Figur 3 zeigt schematisch eine Detailfigur einer möglichen Ausführungsform eines Gehäuses zur Aufnahme einer Steuerungseinheit.
Figur 4 veranschaulicht die Anwendung von gerichtetem Licht zur Überprüfung der Stellung des Objektivs und/oder des Bildsensors.
Figur 5 veranschaulicht die Verwendung von strukturiertem Licht zur Ermittlung der Lage und/oder der Orientierung einer reflektierenden Oberfläche.

In den Figuren sind die nachstehenden Elemente durch die vorangestellten Bezugszeichen gekennzeichnet:
- 1: Objektiv
- 2: Bildsensor
- 3: Steuerungseinheit
- 4: Karosserie
- 5: flächiger Bauteil
- 6: Dämmschicht
- 7: Fahrzeuginneres
- 8: Fahrzeugäußeres
- 9: Gehäuse
- 10: Innenverkleidung
- 11: erster Temperaturbereich
- 12: zweiter Temperaturbereich
- 13: Fenster
- 14: Fensterheizung
- 15: Kamerasensor
- 16: Kabelstrang
- 17: Öffnung der Karosserie
- 18: Verschlusselement
- 19: Fahrzeug
- 20: Bildbereich
- 21: Lichtquelle
- 22: Lichtstrahl
- 23: Fahrzeugoberfläche
- 24: Lichtpunkt
- 25: Gegenstand
- 26: Oberfläche
- 27: Scheinwerfer
- 28: Scheinwerfergehäuse
- 29: Gehäuse
- 30: Rippen
- 31: Wärmeleitfläche
- 32: Leiterplatte
- 33: FPGA
- 34: Wärmeleitelement
- 35: Abstandshalter
- 36: Wärme

Der Schutzumfang wird durch die Ansprüche definiert. In der Figurenbeschreibung werden lediglich anhand der Figuren mögliche Ausführungsformen diskutiert, wobei die Erfindung keinesfalls auf die diskutierten Ausführungsformen beschränkt ist. Der Fachmann ist insbesondere in der Lage die Lehre des oben angeführten allgemeinen Teils mit der Figurenbeschreibung oder die Figurenbeschreibungen zu den einzelnen Figuren miteinander zu kombinieren.

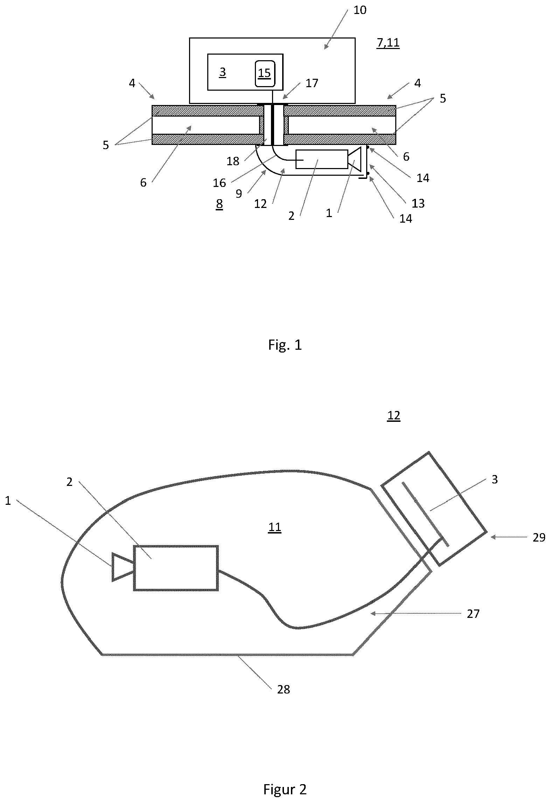

Figur 1 zeigt die prinzipielle Anordnung von Objektiv 1, Bildsensor 2 und Steuerungseinheit 3 einer Kameravorrichtung, welche Kameravorrichtung an einem Fahrzeug angebracht ist. Es ist hierbei ohne Bedeutung für die Offenbarung der Erfindung anhand dieses Ausführungsbeispiels, um welche Art eines Fahrzeuges es sich handelt.

Das Fahrzeug umfasst jedenfalls bei der in Figur 1 dargestellten Ausführung eine Karosserie 4, welche Karosserie 4 durch ein Sandwichelement gebildet wird. Das Sandwichelement umfasst an seinen Oberflächen flächige Bauteile 5 und in seinem Mittenbereich eine Dämmschicht 6. Der gängigen Lehre folgend wird vor allem durch die Dämmschicht 6 eine thermische Trennung zwischen dem Fahrzeuginneren 7 und dem Fahrzeugäußeren 8 geschaffen.

Durch die Dämmschicht werden bei einer Erwärmung des Fahrzeuginneren 7 oder bei einer Erwärmung des Fahrzeugäußeren 8 und sohin unabhängig von der Position der aktiven Heizvorrichtung ein erster Temperaturbereich 11 und ein zweiter Temperaturbereich 12 geschaffen. Der erste Temperaturbereich 11 entspricht im Wesentlichen dem Fahrzeuginneren 7, während der zweite Temperaturbereich 12 im Wesentlichen dem Fahrzeugäußeren 8 entspricht.

Die Kamera umfasst ein Objektiv 1, einen am Objektiv 1 angeordneten Bildsensor 2 und eine Steuerungseinheit 3.

Es ist die Steuerungseinheit 3 im Fahrzeuginneren 7 angeordnet. Die Steuerungseinheit 3 ist von weiteren Elementen wie eine Innenverkleidung 10 des Fahrzeuginneren 7 umgeben, welche Innenverkleidung 10 üblicher Weise eine hohe thermische Speicherkapazität aufweist. Die Innenverkleidung 10 wirkt als ein Gehäuse im Sinne der obigen Offenbarung der Erfindung. Dementsprechend erwärmt sich aufgrund des thermischen Einflusses der Innenverkleidung 10 auf die Steuerungseinheit 3 die Steuerungseinheit 3 bei einer Erwärmung des Fahrzeuginneren 7 nur langsam.

Üblicherweise wird das Fahrzeuginnere 7, welches Fahrzeuginnere 7 ein großes Volumen von Luft einschließt, hauptsächlich durch ein eine erwärmte Luft ausgebendes Gebläse indirekt erwärmt. Dies führt weiters zu einer langsamen Erwärmung der Steuerungseinheit 3, was ebenso durch die erfindungsgemäße Anordnung der Elemente der Kamera berücksichtigt ist.

Das Objektiv 1 und der Bildsensor 2 sind im Fahrzeugäußeren 8 angeordnet. Das Objektiv 1 und der Bildsensor 2 sind durch ein weiteres Gehäuse 9 eingehüllt, welches weiteres Gehäuse 9 vor allem eine Schutzfunktion für das Objektiv 1 und den Bildsensor 2 hat.

Das weitere Gehäuse 9 umfasst ein Fenster 13, durch welches Fenster 13 hindurch mittels des Objektivs 1 und des Bildsensors 2 Bildaufnahmen von der Umgebung des Fahrzeuges gemacht werden. Um einen Eisbeschlag an dem Fenster 13 zu verhindern oder abzubauen, weist das Fenster 13 eine Fensterheizung 14 auf. Figur 1 zeigt eine übliche Fensterheizung 13, welche Fensterheizung 13 einen auf der Oberfläche des Fensters 13 aufgebrachten Heizdraht umfasst. Der Heizdraht erwärmt das Fenster 13 aufgrund des Kontaktes zwischen Fenster 13 und Heizdraht direkt.

Um das Fenster 13 eisfrei zu bekommen oder eisfrei zu halten, muss das Fenster 13 in einer kurzen Zeitspanne von Temperaturen von beispielsweise minus 40 Grad auf eine Temperatur von wenigen Grad Plus gebracht werden. Der Fachmann erkennt, dass eine solche rasche Erwärmung um eine große Temperaturdifferenz eine enorme Heizleistung erfordert, welche Heizleistung durch einen auf dem Fenster 13 aufgebrachten Heizdraht aufgebracht werden kann. Wegen der großen Heizleistung kommt es auch zu einer Erwärmung der umliegenden Objekte und insbesondere der Elemente der Kamera. Das Fenster 13 strahlt hierbei Wärme auf die umliegenden Objekte ab.

Die erfindungsgemäße Anordnung der Kameraelemente sieht vor, dass die gegen eine rasche Erwärmung unempfindlichen Elemente der Kameraelemente - nämlich das Objektiv und der Bildsensor - im Bereich des Heizdrahtes und des Fensters 13 angeordnet sind. Das gegen eine rasche Erwärmung empfindliche Kameraelement - nämlich die Steuerungseinheit - ist durch die Dämmschicht 5 und durch die Innenverkleidung 10 vom Heizdraht und von dem als Wärmestrahler wirkenden Fenster 13 räumlich und thermisch getrennt angeordnet.

Die Steuerungseinheit 3 umfasst einen Kamerasensor 15. Bei einer zu raschen Erwärmung des Kamerasensors 15 besteht die Gefahr, dass es im Kamerasensor 15 zu einer Rissbildung kommt, welche Risse die Funktionalität des Kamerasensors 15 negativ beeinflussen.

Es sind die Steuerungseinheit 3 und der Bildsensor 2 über einen Kabelstrang 16 miteinander verbunden. Der Kabelstrang 16 umfasst einen Lichtwellenleiter zur Übertragung der Daten zwischen dem Bildsensor 2 und der Steuerungseinheit 3 sowie ein Stromkabel zur Energieversorgung des Bildsensors 2. Die Steuerungseinheit 3 ist mit einer Energiequelle des Fahrzeuges verbunden, was in Figur 1 nicht dargestellt ist. Der Kabelstrang 16 wird durch eine Öffnung 17 in der Karosserie geführt, welche Öffnung 17 durch den Kabelstrang 16 und durch ein Verschlusselement 18 zur Unterbindung einer thermischen Konvektion zwischen den Temperaturbereichen 11, 12 verschlossen ist. Der Fachmann ist in der Lage, einen Kabelstrang 16 auszuwählen, welcher Kabelstrang 16 die aufgrund der Erstreckung des Kabelstranges 16 hervorgerufene thermische Belastung aufnehmen kann.

Wegen des Vorliegens der Öffnung 18 wird die Erwärmung den Fensters 13 eine thermische Auswirkung auf den ersten Innenraum 11 haben. Durch die Anordnung der Steuereinheit 3 in der als Gehäuse wirkenden Innenverkleidung 10 wird dieser erwähnte thermische Einfluss reduziert.

Die Innenverkleidung erfüllt die im Anspruch 1 genannten thermischen Eigenschaften.

Die Anordnung des Steuerungselementes 3 außerhalb des weiteren Gehäuses 9 erlaubt eine Ausführung des weiteren Gehäuses 9 mit minimalen Abmessungen. Dies steht im Einklang mit der allgemeinen Anforderung an die Konzeption der Kameravorrichtungen, um die Kameravorrichtungen somit als Elemente mit einem möglichst geringen Luftwiderstand bei Fahrt des Fahrzeuges ausbilden zu können.

Figur 2 zeigt anhand eines Schnittbildes eine Anwendung der erfindungsgemäßen Vorrichtung bei einem Scheinwerfer 27. Nachdem die Funktionsweise, die Form et cetera keinen besonderen Einfluss die bei einem Betrieb des Scheinwerfers 27 stattfindende Erwärmung des Innenraumes des Scheinwerfers 27 und des Scheinwerfers 27 als Ganzes haben, ist der Scheinwerfer 27 in Figur 2 nur schematisch dargestellt. Aus Gründen der Übersichtlichkeit ist in Figur 2 kein Leuchtmittel et cetera des Scheinwerfer 2 eingetragen.

Es ist das Objektiv 1 und der Bildsensor 2 im Inneren des Scheinwerfers 27 angeordnet. Das Objektiv 1 und der Bildsensor 2 sind nach dem Stand der Technik gegen eine hohe Erwärmungsrate und gegen eine hohe Temperatur - wie diese im Inneren des Scheinwerfers 27 beim Betrieb auftreten - unempfindlich.

Durch den Scheinwerfer 27 wird ein Inneres und ein Äußeres und somit ein erster Temperaturbereich 11 im Inneren und ein zweiter Temperaturbereich 12 im Äußeren definiert. Der zweite Temperaturbereich 12 ist durch die Erwärmung durch das im ersten Temperaturbereich 12 angeordnete Leuchtmittel (in Figur 2 nicht dargestellt) als Wärmequelle charakterisiert.

Der erste Temperaturbereich 11 ist vom zweiten Temperaturbereich 12 durch das Scheinwerfergehäuse 28 thermisch getrennt. Nach dem Stand der Technik weisen jedoch Scheinwerfer 27 kein Scheinwerfergehäuse 28 mit einer hohen dämmenden Wirkung auf, weshalb sich der erste Temperaturbereich 11 und der zweite Temperaturbereich 12 ähnlich verhalten werden. Jene Temperatur und/oder jene Erwärmungsrate, welche im zweiten Temperaturbereich messbar ist, ist im Wesentlichen auch im ersten Temperaturbereich 11 messbar.

Aus diesem Grund ist die Anordnung der Steuereinheit 3 in einem Gehäuse 29 mit den in Anspruch 1 angeführten thermischen Eigenschaften vorteilhaft. Es kann die Erwärmung der Steuereinheit 3 zufolge des Betriebes des Scheinwerfers 27 auf eine Temperatur kleiner gleich der maximalen Temperatur der Steuereinheit 3 begrenzt werden. Weiters kann die durch den Betrieb der Steuereinheit 3 entstehende Wärme abgeführt werden.

Der in Figur 2 gezeigte Scheinwerfer 27 kann ein strukturiertes Licht ausgeben, welches strukturiertes Licht beispielsweise an einem Untergrund reflektiert wird. Das reflektierte Licht kann mittels des Objektives 1 und des Bildsensors 2 aufgenommen werden. Durch einen Vergleich des aufgenommenen strukturierten Licht mit Sollwerten kann - wie im Rahmen der Offenbarung der Erfindung im Detail beschrieben - die richtige Einstellung der des Objektives 1 und/oder des Bildsensors 2 und/oder des Scheinwerfers 27 hinsichtlich der extrinsischen Parameter kontrolliert werden.

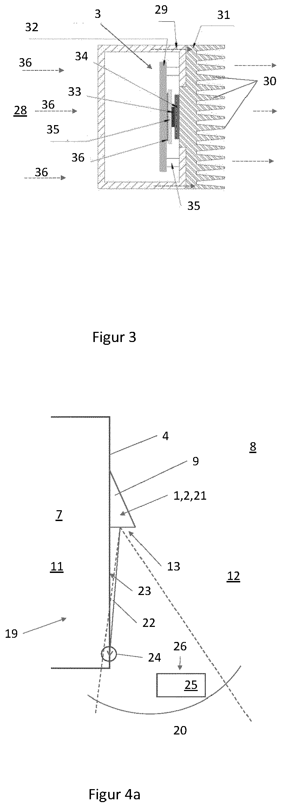

Figur 3 zeigt schematisch eine Detailfigur einer möglichen Ausführungsform eines Gehäuses 29 zur Aufnahme einer Steuerungseinheit. Die Detailfigur umfasst keine Bemaßung, da der Fachmann unter Heranziehung der im Anspruch 1 genannten thermischen Eigenschaften eine Dimensionierung des Gehäuses vornehmen kann.

Das in Figur 3 gezeigte Gehäuse 29 ist benachbart oder angrenzend zu einer Erwärmungsquelle anordenbar. Die in Figur 3 nicht dargestellte Erwärmungsquelle, welche Erwärmungsquelle in Figur 3 nicht dargestellt ist, ist links zu dem in Figur 3 gezeigten Gehäuse 29 anordenbar. Das in Figur 3 gezeigte Gehäuse 29 kann an einem Scheinwerfergehäuse als Erwärmungsquelle angeschlossen sein, wobei die ungefähre Lage des Scheinwerfergehäuses als eine hier beispielhaft erwähnte Erwärmungsquelle durch das Bezugszeichen 28 in Figur 3 eingetragen ist. Der Fachmann kann auch andere Erwärmungsquellen als einen Scheinwerfer benachbart oder angrenzend zu dem in Figur 3 gezeigten Gehäuse anordnen.

Das Gehäuse 29 umfasst an seiner zu der Erwärmungsquelle gerichteten Seitenfläche eine ebene Oberfläche. Die von der Erwärmungsquelle abgewandte Oberfläche umfasst mehrere Rippen 30. Nach dem Stand der Technik sind die Rippen 30 zur Ausbildung einer Wärmeleitfläche 31 geeignet. Bei der in Figur 3 gezeigten Ausführungsform sind die weiteren Seitenflächen des Gehäuses 29 ebenso als ebene Flächen ausgebildet, wobei auch eine Ausbildung als Wärmeleitfläche denkbar ist.

Die Steuerungseinheit 3 umfasst beispielsweise eine Leiterplatte 32 und ein FPGA 33. Die Steuerungseinheit 3 kann auch andere temperaturempfindliche Komponenten umfassen.

Die Steuerungseinheit 3 ist in einem größeren Abstand zu der zu der Erwärmungsquelle gerichteten Seitenfläche als zu der Kühlrippe 32 angeordnet. Der Fachmann kann diesen Abstand in Anbetracht der untenstehenden Zielsetzungen abändern.

Die Steuerungseinheit 3 ist über eine Wärmeleitelement 34 an der Wärmeleitfläche 31 angeschlossen. Der FGGA 33 und die Leiterplatte 32 der Steuerungseinheit 3 sind über ein Zwischenstück 35 mittels Lötverbindungen 36 verbunden. Der Abstand zwischen der Leiterplatte 32 und der Innenoberfläche des Gehäuses 29 ist über Abstandshalter 35 definiert.

Die von der Erwärmungsquelle abgegebene Wärme 36 wird der gängigen Lehre folgend auf das Gehäuse 29 abgegeben. Das beispielsweise auf Aluminium hergestellte Gehäuse 29 leitet diese Wärme 36 zu einem großen Teil zu der Wärmeleitfläche 31, wo die Wärme an die Umgebung abgegeben wird. Hierdurch wird verhindert, dass eine übermäßige Erwärmung im Sinne einer Erwärmung über eine Temperaturgrenze und/oder im Sinne einer Erwärmung pro Zeiteinheit unterbunden wird.

Die Steuereinheit 3 ist ebenso mit der Wärmeleitfläche 31 verbunden, sodass die Wärme der Steuereinheit 3 über die Wärmeleitfläche 31 abgegeben wird und so eine übermäßige Erwärmung der Steuereinheit 3 unterbunden wird.

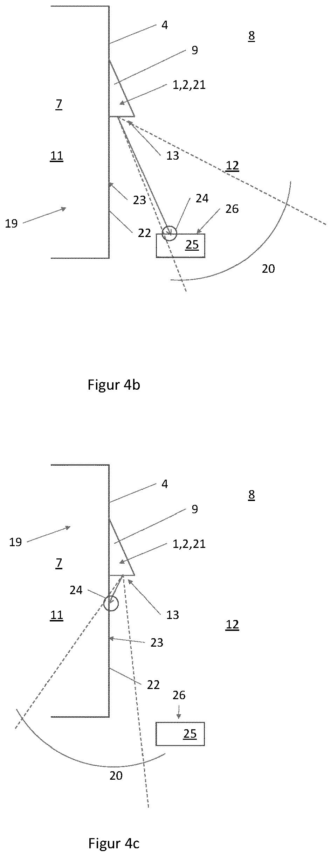

Die Figuren 4 veranschaulichen die Überprüfung der Stellung des Objektives 1 und des Bildsensors 2 zu dem Fahrzeug 19. Insbesondere soll überprüft werden, ob der tatsächliche Bildbereich 20 mit einem in Figur 4 nicht eingetragenen Soll-Bildbereich übereinstimmt. In weiterer Folge kann die Abweichung bestimmt werden.

Aus Gründen der Übersichtlichkeit sind in Figur 4 nur das Objektiv 1 und der Bildsensor 2 als Elemente der Kamera mit Bezugszeichen versehen. Die Steuerungseinheit ist aus eben diesem Grund in Figur 4 nicht eingetragen.

Die Kamera kann weiters eine Lichtquelle 21 umfassen, mittels welcher Lichtquelle 21 ein strukturiertes Licht ausgegeben wird. In Figur 4 ist das strukturierte Licht durch den Lichtstrahl 22 dargestellt.

Gemäß einer bei der Überprüfung zu Grunde liegende und anzuwendenden Regel kann der Lichtstrahl 22 in einer bestimmten Position des Bildbereiches von einer Oberfläche reflektiert werden. Bei dem in Figur 4a veranschaulichtem Anwendungsbeispiel wird der Lichtstrahl 22 durch die Fahrzeugoberfläche 23 des Fahrzeuges 19 reflektiert. Der reflektierte Lichtstrahl 22 ist in Form eines Lichtpunktes 24 in dem durch den Bildsensor 2 aufgenommenen Bildbereich 20 sichtbar. Die Ist-Position des Lichtpunktes 24 kann zur Bewertung der Einstellung des Objektivs mit der Soll-Position des Lichtpunktes abgeglichen werden.

Figur 4b zeigt den Fall, dass die Kamera, sprich das Objektiv 1, der Bildsensor 2 und die Lichtquelle unrichtig vom Fahrzeug 19 weg orientiert sind. Der Lichtstrahl 22 wird nicht von der Fahrzeugoberfläche 23 reflektiert. Eine Reflexion des Lichtstrahls 22 an einer Oberfläche eines Gegenstandes 25 ist durch die von den Reflexionseigenschaften der Fahrzeugoberfläche 23 abweichenden Reflexionseigenschaften der Oberfläche des Gegenstandes 25 ermittelbar.

Figur 4c zeigt den Fall, dass die Kamera, sprich das Objektiv 1, der Bildsensor 2 und die Lichtquelle 22 unrichtig zum Fahrzeug 19 hin orientiert sind. Der Lichtstrahl 22 wird zwar von der Fahrzeugoberfläche 23 reflektiert, jedoch stimmt die Ist-Position des Lichtpunktes 24 nicht mit der Soll-Position überein, wodurch die Fehlstellung des Objektives 1, des Bildsensors 2 und der Lichtquelle 22 ermittelbar ist.

Vorzugsweise ist - wie in den Figuren 2 eingetragen - die Lichtquelle 21 mit dem Objektiv 1 und/oder dem Bildsensor 2 fest verbunden.

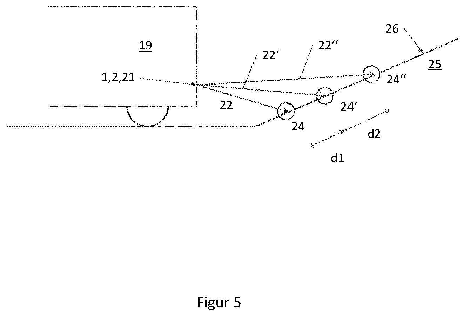

Figur 5 veranschaulicht die Ermittlung der Lage und/oder der Orientierung einer Oberfläche 26 eines Gegenstandes 25 durch die Ausgabe eines strukturierten Lichtes durch eine Lichtquelle 21. Die Lichtquelle 21 ist wiederum fest mit dem Objektiv 1 und/oder dem Bildsensor 2 verbunden.

Die Lichtquelle 21 emittiert die Lichtstrahlen 22, 22', 22", welche Lichtstrahlen 22, 22', 22" an der Oberfläche 26 des Gegenstandes 25 an den Punkten 24, 24', 24" reflektiert werden. In Abhängigkeit der Distanz der Oberfläche 26 zu der Lichtquelle 21 und in Abhängigkeit der Neigung der Oberfläche 26 sind die Lichtpunkte 24, 24`, 24" durch die Abstände d1, d2 unterschiedlich beabstandet.

Da die Lichtpunkte 24, 24', 24" im Bildbereich 20 liegen, sind diese mittels des Bildsensors 2 aufnehmbar, sodass anhand der über den Bildsensor 2 generierten Bilddaten die Positionen der Lichtpunkte 24, 24', 24" ermittelbar sind und unter Beachtung der oben angeführten geometrischen Verhältnisse die Lage und/oder die Neigung der Oberfläche 26 unter Anwendung der gängigen Lehre der Geometrie ermittelbar sind.

Das durch die Figur 5 veranschaulichte Verfahren kann auch Verfahrensschritte umfassen, mittels welchen Verfahrensschritten die Lage und/oder die Orientierung der Oberfläche 26 ermittelt wird. Der Fachmann kennt derartige Verfahrensschritte nach dem Stand der Technik.

## Patentansprüche

1. Anordnung zum Anbringen
an einem Fahrzeug umfassend einen ersten Temperaturbereich und einen zweiten Temperaturbereich,
welche Anordnung eine Kamera, ein Scheinwerfergehäuse (28), ein Gehäuse (29) und eine Erwärmungsquelle umfasst,
welche Kamera ein Objektiv (1) mitsamt einem Bildsensor (2) und eine mit einer maximalen Erwärmungsrate zu erwärmenden Steuerungseinheit (3) umfasst, wobei das Objektiv (1) und der Bildsensor (2) in einem Inneren des Scheinwerfergehäuses (28) und in einem durch das Innere des Scheinwerfergehäuses (28) definierten ersten Temperaturbereich (11) angeordnet sind, und
die Steuerungseinheit (3) in einem Äußeren des Scheinwerfergehäuses (28) und in einem durch das Scheinwerfergehäuse (28) definierten zweiten Temperaturbereich (12) angeordnet ist, welcher zweiter Temperaturbereich (12) mit einer in dem ersten Temperaturbereich (11) angeordneten Erwärmungsquelle erwärmbar ist,
wobei der erste Temperaturbereich (11) und der zweite Temperaturbereich (12) durch das Scheinwerfergehäuse (28) und einen Teil der Fahrzeugkarosserie des Fahrzeuges getrennt sind,
wobei der Bildsensor (2) und die Steuerungseinheit (3) über eine Datenverbindung verbunden sind, wobei die Steuerungseinheit (3) in dem Gehäuse (29) angeordnet ist,
**dadurch gekennzeichnet, dass**
das Gehäuse (29) eine ebene Oberfläche an seiner zu der Erwärmungsquelle gerichteten Seitenfläche und mehrere Rippen (30) zur Ausbildung einer Wärmeleitfläche (31) an einer von Erwärmungsquelle abgewandten Oberfläche umfasst,
wobei das Gehäuse (29) und die Steuerungseinheit (3) über thermisch leitende Werkstücke (34) thermisch gekoppelt sind,
wobei die Steuerungseinheit (3) über thermische leitende Werkstücke (34) an der Wärmeleitfläche (31) angeschlossen ist,
wobei die Steuerungseinheit (3) in einem größeren Abstand zu der Seitenfläche als zu einer Kühlrippe angeordnet ist, wobei
das Gehäuse (29) eine Wärmeleitzahl von mindestens 150,0 W/mK und/oder von maximal 250,0 W/mK aufweist, sodass
das Gehäuse innerhalb eines Erwärmungsratenbereiches umfassend eine untere Erwärmungsratenbereichsgrenze und eine obere Erwärmungsratenbereichsgrenze erwärmbar ist.

2. Anordnung nach Anspruch 1, **dadurch gekennzeichnet, dass**
die Datenverbindung über einen Lichtwellenleiter oder über ein HD-SDI Kabel hergestellt ist.

3. Anordnung nach einem der Ansprüche 1 bis 2, **dadurch gekennzeichnet, dass** der Scheinwerfer eine Erwärmungsquelle ist.

4. Anordnung nach einem der Ansprüche 1 bis 3,
**dadurch gekennzeichnet, dass**
die Anordnung einen Temperaturfühler umfasst, welcher Temperaturfühler in den jeweiligen Temperaturbereichen zur Bestimmung der Temperatur
des Temperaturbereiches und/oder der in den jeweiligen Temperaturbereichen angeordneten Elemente angeordnet ist.

5. Anordnung nach einem der Ansprüche 1 bis 4,
**dadurch gekennzeichnet, dass**
das Objektiv (1) eine Lichtquelle umfasst, welche Lichtquelle ein Licht in den Bildbereich des Bildsensors abgibt.

6. Anordnung nach Anspruch 5, **dadurch gekennzeichnet, dass** das Licht ein strukturiertes Licht ist.

## Claims

1. An arrangement for attachment to a vehicle comprising a first temperature area and a second temperature area,
which arrangement comprises a camera, a head-lamp housing (28), a housing (29) and a heating source,
which camera comprises a lens (1) including an image sensor (2) and a control unit (3) to be heated at a maximum heating rate, wherein
the lens (1) and the image sensor (2) are arranged in an interior of the head-lamp housing (28) and in a first temperature area (11) defined by the interior of the head-lamp housing (28), and
the control unit (3) is arranged in an exterior of the head-lamp housing (28) and in a second temperature area (12) defined by the head-lamp housing (28),
which second temperature area (12) is heatable with a heating source arranged in the first temperature area (11),
wherein the first temperature area (11) and the second temperature area (12) are separated by the head-lamp housing (28) and part of the vehicle body of the vehicle,
wherein the image sensor (2) and the control unit (3) are connected via a data link,
wherein the control unit (2) is arranged in the housing (29),
**characterised in that**
the housing (29) comprises a planar surface on its side face facing the heating source and multiple ribs (30) for forming a thermally conductive face (31) on a surface facing away from the heating source,
wherein the housing (29) and the control unit (3) are thermally coupled via thermally conductive workpieces (34),
wherein the control unit (3) is connected to the thermally conductive face (31) via thermally conductive workpieces (34),
wherein the control unit (3) is arranged at a greater distance from the side faces than from a cooling rib, wherein
the housing (29) has a thermal conductivity of at least 150.0 W/mK and/or of at most 250.0 W/mK, such that
the housing is heatable within a heating rate area comprising a lower heating rate area threshold and an upper heating rate area threshold.

2. The arrangement of claim 1, **characterised in that**
the data link is established via an optical fibre or via an HD-SDI cable.

3. The arrangement of any one of claims 1 and 2, **characterised in that**
the head lamp is a heating source.

4. The arrangement of any one of claims 1 to 3, **characterised in that**
the arrangement comprises a temperature probe,
which temperature probe is arranged in the respective temperature areas for determining the temperature of said temperature area and/or of the elements arranged in the respective temperature areas.

5. The arrangement of any one of claims 1 to 4, **characterised in that**
the lens (1) comprises a light source, which light source emits a light into the range of the image sensor.

6. The arrangement of claim 5, **characterised in that**
the light is a patterned light.

## Revendications

1. Ensemble destiné à être monté sur un véhicule, comprenant une première zone de température et une deuxième zone de température,
ledit ensemble comprenant une caméra, un boîtier de phare (28), un boîtier (29) et une source de chauffage,
ladite caméra comprenant un objectif (1) avec un capteur d'image (2) et une unité de commande (3) à chauffer à une vitesse de chauffage maximale,
ledit objectif (1) et ledit capteur d'image (2) étant disposés à l'intérieur du boîtier de phare (28) et dans une première zone de température (11) définie par l'intérieur du boîtier de phare (28), et l'unité de commande (3) étant disposée dans un extérieur du boîtier de phare (28) et dans une deuxième zone de température (12) définie par le boîtier de phare (28),
ladite deuxième zone de température (12) pouvant être chauffée par une source de chauffage disposée dans la première zone de température (11),
ladite première zone de température (11) et ladite deuxième zone de température (12) étant séparées par le boîtier de phare (28) et une partie de la carrosserie du véhicule,
ledit capteur d'image (2) et l'unité de commande (3) étant reliés par une liaison de données, ladite unité de commande (3) étant disposée dans le boîtier (29),
**caractérisé en ce que**
le boîtier (29) comprend une surface plane sur sa surface latérale orientée vers la source de chauffage et une pluralité d'ailettes (30) pour former une surface (31) de conduction thermique sur une surface détournée de la source de chauffage,
le boîtier (29) et l'unité de commande (3) étant couplés thermiquement par l'intermédiaire de pièces à usiner (34) thermiquement conductrices,
l'unité de commande (3) étant raccordée à la surface (31) de conduction thermique par l'intermédiaire de pièces à usiner (34) thermiquement conductrices,
l'unité de commande (3) étant située à une distance plus grande de la surface latérale que d'une ailette de refroidissement,
le boîtier (29) présentant un coefficient de conductivité thermique d'au moins 150,0 W/mK et/ou de 250,0 W/mK au maximum, de sorte que
le boîtier peut être chauffé dans une plage de taux de chauffage comprenant une limite inférieure de plage de taux de chauffage et une limite supérieure de plage de taux de chauffage.

2. Ensemble selon la revendication 1, **caractérisé en ce que**
la liaison de données est établie via une fibre optique ou un câble HD-SDI.

3. Ensemble selon l'une des revendications 1 à 2, **caractérisé en ce que**
le phare est une source de chauffage.

4. Ensemble selon l'une des revendications 1 à 3, **caractérisé en ce que**
l'ensemble comprend un capteur de température,
ledit capteur de température étant disposé dans les zones de température respectives pour déterminer la température de la zone de température et/ou des éléments disposés dans les zones de température respectives.

5. Ensemble selon l'une des revendications 1 à 4, **caractérisé en ce que**
l'objectif (1) comprend une source de lumière, ladite source de lumière émettant une lumière dans la zone d'image du capteur d'image.

6. Ensemble selon la revendication 5, **caractérisé en ce que**
la lumière est une lumière structurée.
